(19) **Europäisches Patentamt / European Patent Office / Office européen des brevets**

(11) **EP 2 301 188 B1**

(12) **FASCICULE DE BREVET EUROPEEN**

(45) Date de publication et mention de la délivrance du brevet:
**10.04.2019 Bulletin 2019/15**

(21) Numéro de dépôt: **09766081.5**

(22) Date de dépôt: **16.06.2009**

(51) Int Cl.:
*H04L 9/32* (2006.01)　　　*G06K 19/07* (2006.01)

(86) Numéro de dépôt international:
**PCT/FR2009/051143**

(87) Numéro de publication internationale:
**WO 2009/153519 (23.12.2009 Gazette 2009/52)**

(54) **PROCÉDÉ D'AUTHENTIFICATION D'UNE ENTITÉ AUPRÈS D'UN VÉRIFIEUR**

VERFAHREN ZUM AUTHENTIFIZIEREN EINER ENTITÄT DURCH EINEN VERIFIZIERER

METHOD FOR AUTHENTICATING AN ENTITY BY A VERIFIER

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **16.06.2008 FR 0853956**

(43) Date de publication de la demande:
**30.03.2011 Bulletin 2011/13**

(73) Titulaire: **Orange**
**75015 Paris (FR)**

(72) Inventeurs:
- **CANARD, Sébastien**
  **F-14000 Caen (FR)**
- **COISEL, Iwen**
  **1300 Wavre (FR)**
- **GIRAULT, Marc**
  **F-14000 Caen (FR)**

(56) Documents cités:
- ZHAOYU LIU ET AL: "True random number generator in RFID systems against traceability" CONSUMER COMMUNICATIONS AND NETWORKING CONFERENCE, 2006. CCNC 2006. 20 06 3RD IEEE LAS VEGAS, NV, USA 8-10 JAN. 2006, PISCATAWAY, NJ, USA,IEEE, vol. 1, 8 janvier 2006 (2006-01-08), pages 620-624, XP010893171 ISBN: 978-1-4244-0085-0
- PHILIPPE GOLLE ET AL: "Universal Re-encryption for Mixnets" TOPICS IN CRYPTOLOGY Â CT-RSA 2004; [LECTURE NOTES IN COMPUTER SCIENCE;;LNCS], SPRINGER-VERLAG, BERLIN/HEIDELBERG, vol. 2964, 30 janvier 2004 (2004-01-30), pages 163-178, XP019002807 ISBN: 978-3-540-20996-6
- YANG CUI; KOBARA K; MATSUURA K; IMAI H: "LIGHTWEIGHT ASYMMETRIC PRIVACY-PRESERVING AUTHENTICATION PROTOCOLS SECURE AGAINST ACTIVE ATTACK" 2007 IEEE INTERNATIONAL CONFERENCE ON PERVASIVE COMPUTING AND COMMUNICATIONS WORKSHOPS; IEEE COMPUTER SOCIETY, 23 mars 2007 (2007-03-23), pages 1-6, XP002505894 White Plains, NY, USA ISBN: 0-7695-2788-4
- DAVID NOWAK ED - SIHAN QING ET AL: "A Framework for Game-Based Security Proofs", 12 December 2007 (2007-12-12), INFORMATION AND COMMUNICATIONS SECURITY; [LECTURE NOTES IN COMPUTER SCIENCE], SPRINGER BERLIN HEIDELBERG, BERLIN, HEIDELBERG, PAGE(S) 319 - 333, XP019136964, ISBN: 978-3-540-77047-3

**Description**

L'invention concerne une technique pour authentifier une entité auprès d'un vérifieur, l'entité possédant un identifiant, le vérifieur possédant un couple de clés privée et publique.

L'invention trouve une application particulièrement intéressante dans le domaine de la cryptographie à bas coût, notamment dans le domaine de la radio-identification, de l'anglais "Radio Frequency Identification", ou "RFID".

La radio-identification est une technique pour stocker et récupérer des données à distance en utilisant des marqueurs appelés radio-étiquettes, ou étiquettes radio (on parle également de "tag RFID"). Une étiquette radio est un petit objet, tel qu'une étiquette auto-adhésive, qui peut être collée sur, ou incorporée dans des objets ou produits. Elle comprend une antenne associée à une puce électronique qui lui permet de recevoir et de répondre à des requêtes radio émises depuis un émetteur-récepteur appelé lecteur. On utilise par exemple les étiquettes radio pour identifier des personnes lorsque les étiquettes sont intégrées dans des passeports, dans des titres de transport, ou dans des cartes de paiement, ou pour identifier des produits comme avec un code barre. Le lecteur est alors le vérifieur en charge de l'authentification des étiquettes qui sont des entités à authentifier.

Dans une optique de protection de la vie privée, notamment de la vie privée de personnes détenteurs d'étiquette radio, il est généralement souhaitable que le protocole d'authentification d'étiquettes par un lecteur possède trois propriétés :

- le protocole doit être anonyme, c'est-à-dire qu'il ne doit pas être possible pour un adversaire malveillant d'identifier une entité qui intervient dans une authentification.
- l'entité ne doit pas être traçable, c'est-à-dire qu'il ne doit pas être possible de relier deux authentifications différentes d'une même entité, et
- si l'adversaire malveillant obtient l'identifiant d'une entité par quelque méthode que ce soit, par une méthode dite de "reverse engineering", par une attaque physique sur une carte support de l'étiquette, etc., on ne doit pas pouvoir reconnaître d'anciennes authentifications de l'entité. Cette dernière propriété est dite propriété de "forward privacy". On remarque que la propriété d'anonymat est un pré-requis indispensable pour la vérification des propriétés de non traçabilité et de "forward privacy".

Lorsqu'on utilise un tel protocole pour l'identification des personnes, on comprend que ces trois propriétés participent au respect de la vie privée de ces personnes.

Afin de satisfaire ces propriétés, différents protocoles d'authentification peuvent être définis, par exemple, des protocoles basés sur un mécanisme de question-réponse et utilisant un aléa. On connaît ainsi des protocoles basés sur la cryptographie à clé secrète.

Dans un exemple d'utilisation de la cryptographie à clé secrète, chaque entité apte à s'authentifier auprès d'un vérifieur possède une clé secrète unique, connue du vérifieur. On connaît ainsi le protocole "WSRE" (du nom de leurs auteurs, Weis-Sarma-Rivest-Engel) dans lequel, sur une requête d'authentification du vérifieur, l'entité utilise un identifiant ID qui lui est propre et calcule $H(ID \| r)$ en appliquant une fonction de hachage $H$ à la concaténation de son identifiant ID et d'un aléa $r$ choisi par l'entité, puis envoie le résultat de ce calcul ainsi que l'aléa $r$ au vérifieur. On remarque que l'identifiant ID de l'entité est utilisé comme clé secrète de l'entité. Pour que ce protocole d'authentification soit anonyme, le vérifieur doit alors tester chaque identifiant d'entité, accessible par exemple via une base de données des identifiants, et calculer le haché de chacun des identifiants concaténé à l'aléa reçu pour retrouver l'identifiant de l'entité qui a répondu à cette requête d'authentification. On notera que lorsque le nombre d'entités aptes à s'authentifier auprès du vérifieur est très grand, une telle recherche est très coûteuse en calculs.

Dans une variante de réalisation d'un tel protocole qui évite un rejeu par un adversaire, le vérifieur envoie un premier aléa à l'entité. L'entité répond en renvoyant le concaténé de son identifiant au premier aléa et à un deuxième aléa qu'elle génère, ainsi que le deuxième aléa. Dans cette réalisation encore, pour garantir l'anonymat, une recherche parmi tous les identifiants d'entité doit être effectuée, ce qui reste encore une fois coûteux en calculs.

Le document: "Universal Re-encryption for Mixnets", PHILIPPE GOLLE ET AL, TOPICS IN CRYPTOLOGY, CT-RSA 2004, LECTURE NOTES IN COMPUTER SCIENCE (LNCS), SPRINGER-VERLAG, BERLIN/HEIDELBERG, vol. 2964, 30 janvier 2004 (2004-01-30), pages 163-178, XP019002807, ISBN: 978-3-540-20996-6, correspond à l'état de la technique le plus proche car il s'intéresse à des protocoles d'authentification utilisant des schémas cryptographiques à clé publique fondés sur l'algorithme de chiffrement/déchiffrement El Gamal.

Il existe donc un besoin pour un protocole d'authentification d'une entité auprès d'un vérifieur, qui soit anonyme et qui offre de bonnes performances en termes de rapidité de l'authentification.

L'invention répond à ce besoin en proposant un procédé pour authentifier une entité auprès d'un vérifieur.

Partant d'une première hypothèse où les identifiants d'entité sont secrets, chacun étant connu d'une part de l'entité qui détient cet identifiant, et d'autre part du vérifieur qui accède à une base de données contenant tous les identifiants d'entité, le protocole selon l'invention garantit l'anonymat des entités puisque l'identifiant qui intervient dans l'authentification est chiffré à l'attention du vérifieur. Ainsi, un adversaire malveillant ne peut pas identifier une entité qui intervient dans une authentification. Seul le vérifieur est apte à identifier l'entité qui s'authentifie puisque seul le vérifieur détient la clé privée de déchiffrement, associée à la clé publique utilisée par l'entité pour chiffrer la valeur qu'elle envoie au vérifieur. L'anonymat est donc assuré ici par le chiffrement.

L'adversaire ne peut pas se faire passer pour une entité légitime car les identifiants d'entité sont secrets, connus d'une part des entités, d'autre part du vérifieur, via la base de données des identifiants d'entité.

En outre, le procédé selon l'invention offre des performances intéressantes en termes de temps de calcul, comparé à des protocoles de l'art antérieur, puisque le vérifieur identifie l'entité qui s'authentifie au moment même du déchiffrement de la valeur qu'il reçoit de l'entité en réponse à une requête d'authentification. Il n'a ainsi aucune recherche à effectuer dans une base des identifiants d'entité, ce qui, lorsque le nombre d'entités aptes à s'authentifier est très grand, est très avantageux en termes de performances.

Le protocole selon l'invention combine l'utilisation de la cryptographie à clé publique du point du vue du vérifieur, qui met à disposition des entités sa clé publique de chiffrement et qui détient seul sa clé privée de déchiffrement, et l'utilisation de clés secrètes qui sont les identifiants d'entité.

Le protocole selon l'invention possède les propriétés requises dans l'optique de la protection de la vie privée. Outre l'anonymat, le protocole garantit :

- la propriété de non traçabilité : deux authentifications effectuées par la même entité ne peuvent être reliées entre elles, hormis par l'entité et le vérifieur concernés par l'authentification. La non traçabilité est inhérente à l'utilisation des deux aléas lors de l'authentification : le premier aléa r choisi par le vérifieur et envoyé dans une requête d'authentification, et un deuxième aléa w, propre au schéma de chiffrement utilisé et choisi par l'entité pour chiffrer la valeur qu'elle envoie au vérifieur en réponse à la requête,
- la propriété de forward privacy : si l'adversaire obtient frauduleusement l'identifiant d'une entité, il ne peut pas reconnaître de précédentes authentifications de l'entité du fait que le deuxième aléa w choisi et utilisé par l'entité pour chiffrer la valeur renvoyée en réponse à la requête d'authentification du vérifieur est différent à chaque authentification.

En outre, avec le protocole selon l'invention, des attaques dites par rejeu ne sont pas possibles. Au cours de telles attaques, l'adversaire observe dans un premier temps les échanges entre le vérifieur et l'entité, puis dans un deuxième temps, rejoue une réponse renvoyée par une entité au vérifieur lors d'une précédente authentification, pour une authentification courante. Avec le protocole selon l'invention un tel rejeu n'est pas possible. En effet, chaque authentification et chaque réponse de l'entité dépend du premier aléa transmis du vérifieur à l'entité, deux réponses renvoyées par une entité qui s'authentifie lors de deux authentifications différentes sont donc différentes.

Enfin, si l'utilisation de la cryptographie à clé publique offre une solution au problème de l'anonymat des entités, au moyen d'un chiffrement à l'attention du vérifieur plutôt que par une recherche exhaustive parmi un très grand nombre d'identifiants, le choix d'algorithmes adaptés dans le procédé selon l'invention assure une efficacité en termes de temps de calculs. En effet, il est possible d'utiliser des algorithmes d'authentification basé sur le chiffrement à clé publique, par exemple "RSA" (du nom des inventeurs Rivest, Shamir et Adelman). Cependant, de tels algorithmes à clé publique sont souvent très coûteux pour l'entité qui s'authentifie car ils nécessitent de faire d'importants calculs mathématiques, tels que des multiplications, voire des exponentiations modulaires. Le procédé selon l'invention utilise des algorithmes adaptés pour minimiser les calculs à effectuer par une entité qui s'authentifie. En effet, les algorithmes permettent de pré-calculer des données nécessaires à l'opération de chiffrement. Ainsi, le coût inhérent aux opérations de chiffrement est moindre pour les entités qui s'authentifient.

La donnée d'authentification est un antécédent $a_{id}$ de l'identifiant, une fonction à sens unique f appliquée à cet antécédent produisant l'identifiant ID de l'entité.

Le vérifieur obtient l'identifiant d'une entité qu'il authentifie par calcul, en appliquant la fonction à sens unique f à la donnée d'authentification reçue de l'entité. La donnée d'authentification est l'antécédent $a_{id}$ de l'identifiant ID de l'entité par la fonction à sens unique f. De façon avantageuse, il n'est pas nécessaire que l'identifiant de l'entité soit secret. Le secret, connu seulement de l'entité, est l'antécédent $a_{id}$. On remarque que l'antécédent $a_{id}$ ne peut être calculé par un adversaire, même si celui-ci connaît l'identifiant ID de l'étiquette puisque par définition la fonction f à sens unique est difficile à inverser, c'est-à-dire qu'il est extrêmement difficile de déduire la donnée d'entrée, ici $a_{id}$, de la seule donnée de sortie, ici $f(a_{id})$, ou l'identifiant ID de l'entité.

Dans une réalisation du procédé selon l'invention, l'étape de chiffrement utilise au moins un résultat d'un pré-calcul, stocké dans l'entité.

Le procédé selon l'invention tire parti de la possibilité de pré-calculer des éléments intervenant dans l'opération de chiffrement effectuée par l'entité. Ainsi, des calculs mathématiques coûteux pour l'entité, comme par exemple des exponentiations modulaires, sont effectués préalablement à une, ou à des authentifications. Lors d'une authentification, l'entité n'effectue plus comme opérations, que ce qui est nécessaire. Lorsque l'entité a peu de puissance de calcul, on comprend que le gain, en termes de performances, est non négligeable.

Le chiffrement peut être conforme à un schéma de chiffrement à clé publique El Gamal, et

- l'étape de chiffrement de la valeur v produit deux éléments $T_1 = v.y^w$ et $T_2 = g^w$, où :

- g est un générateur d'un groupe utilisé par ledit schéma,
- y est la clé publique à laquelle est associée la clé privée x du vérifieur, lesdites clés étant telles que $y = g^x$,
- w est un deuxième aléa choisi par l'entité,

- l'étape de déchiffrement par le vérifieur des deux éléments $T_1$ et $T_2$ calcule $T_1.T_2^{-x}$ pour fournir ladite valeur v.

Avantageusement, le schéma de chiffrement El Gamal est adapté pour permettre un pré-calcul et d'un nombre prédéfini de données qui sont utilisées par l'entité lors de l'opération de chiffrement. Pour une authentification courante, on appelle coupon d'authentification ces données pré-calculées utilisées pour chiffrer la valeur à renvoyer au vérifieur. Un coupon comprend deux parties, une première partie $y^w$, calculée au moyen de la clé publique du vérifieur et du deuxième aléa w choisi par l'entité, et une deuxième partie $g^w$ calculée au moyen du générateur de groupe dans lequel sont effectués les calculs du schéma de chiffrement et du deuxième aléa w choisi par l'entité. Ainsi, à partir d'un nombre prédéfini d'aléas, un nombre prédéfini de coupons d'authentification sont calculés. Ces coupons sont stockés par l'entité qui les utilise au cours d'authentifications successives. Ainsi, lors d'une authentification de l'entité auprès du vérifieur, l'entité utilise deux de ces données pré-calculées pour chiffrer la valeur qu'il envoie en réponse à la requête d'authentification reçue du vérifieur. En utilisant ces données pré-calculées, l'étiquette n'a plus, lors d'une authentification requise par le vérifieur, qu'à faire une multiplication entre le premier aléa reçu du vérifieur et concaténé à son identifiant ID, et l'élément pré-calculé $y^w$. Les temps de calcul sont donc optimisés pour l'étiquette par rapport à un temps de calcul habituellement nécessaire pour l'étiquette pour chiffrer la valeur à envoyer au vérifieur sans utiliser de données pré-calculées. L'optimisation du temps de calcul pour l'étiquette, couplé aux performances inhérentes au procédé d'authentification du point de vue du vérifieur (le vérifieur obtient directement l'identifiant ID de l'étiquette lors du déchiffrement de la valeur qu'il reçoit chiffrée), permet de qualifier le procédé d'authentification selon l'invention d'ultra-rapide.

L'étiquette peut effectuer le pré-calcul elle-même. Les coupons peuvent être calculés par une application externe et inscrits dans une mémoire de l'étiquette. Une telle inscription peut se faire régulièrement pour recharger en coupons la mémoire de l'étiquette en vue de répondre à de futures demandes d'authentification du vérifieur.

Le chiffrement peut être conforme à un schéma de chiffrement à clé publique, appelé schéma El Gamal modifié, et

- l'étape de chiffrement de la valeur (v) produit deux éléments $T_1' = v \oplus H(y^w)$, et $T_2' = g^w$, où

- H est une fonction identité, et $\oplus$ une opération de ou exclusif,
- g est un générateur d'un groupe utilisé par ledit schéma,
- y est la clé publique à laquelle est associée la clé privée x du vérifieur, lesdites clés étant telles que $y = g^x$,
- w est un deuxième aléa choisi par l'entité,

- l'étape de déchiffrement par le vérifieur des deux éléments $T_1$ et $T_2$ calcule $T_1' \oplus H(T_2'^x)$ pour fournir ladite valeur v.

Dans ce schéma, appelé schéma El Gamal modifié, lorsque l'on utilise des données pré-calculées, l'étiquette n'a plus, lors d'une authentification requise par le vérifieur, qu'à faire un ou exclusif entre le premier aléa reçu du vérifieur et concaténé à son identifiant ID, et $H(y^w)$, où l'élément $y^w$ est pré-calculé.

Dans une variante de réalisation du schéma de chiffrement El Gamal modifié, l'étape de chiffrement de la valeur (v) produit deux éléments $T_1' = v \oplus H'(y^w)$, et $T_2' = g^w$, où

- H' est une fonction de hachage, et $\oplus$ une opération de ou exclusif,
- g est un générateur d'un groupe utilisé par ledit schéma,
- y est la clé publique à laquelle est associée la clé privée x du vérifieur, lesdites clés étant telles que $y = g^x$,
- w est un deuxième aléa choisi par l'entité,

  - l'étape de déchiffrement par le vérifieur des deux éléments $T_1$ et $T_2$ calcule $T_1' \oplus H'(T_2'^x)$ pour fournir ladite valeur v.

De façon avantageuse, le schéma de chiffrement El Gamal modifié offre des performances très intéressantes pour l'étiquette qui, pour répondre à une demande d'authentification du vérifieur n'a que peu de calculs, et des calculs simples, à faire. Couplé à un pré-calcul et un stockage par l'étiquette de coupons pour répondre à une demande d'authentification du vérifieur, on comprend que le procédé d'authentification gagne en efficacité du point de vue de l'étiquette.

Une fonction de hachage est une fonction à sens unique qui produit des hachés de taille assez courte. Ainsi, le stockage de la fonction de hachage H, par exemple SHA-256, appliquée à $y^w$ nécessite 160 bits pour être sûr. Le stockage de $y^w$, ainsi que de $g^w$ peut nécessiter 160 bits si l'on utilise comme corps pour le schéma de chiffrement les courbes elliptiques. Avantageusement le procédé selon l'invention est très bien adapté pour des authentifications d'entités de type étiquettes RFID qui ont une capacité mémoire limitée.

Lorsque le schéma El Gamal modifié est utilisé, le procédé comprend en outre un envoi par l'entité d'un message d'authentification calculé au moyen d'un secret et d'un message à protéger, ledit secret dépendant de l'identifiant de l'étiquette, ledit message à protéger comprenant au moins une partie du premier aléa.

De façon avantageuse, l'envoi d'un message d'authentification, par exemple de type "MAC" (pour "Message Authentication Code") permet d'éviter des attaques par substitution lorsque le schéma de chiffrement El Gamal modifié est utilisé. En effet, en utilisant un tel schéma, il est possible pour un adversaire de se faire passer pour l'entité sans connaître l'identifiant ID de l'entité. Renvoyer le message d'authentification MAC au vérifieur permet de prouver au vérifieur que l'entité connaît l'identifiant ID.

Le procédé peut comprendre au préalable :

- un pré-calcul d'un nombre prédéfini de coupons d'authentification, un coupon d'authentification comprenant deux parties $y^w$, $g^w$, lesdites deux parties dépendant du deuxième aléa w choisi par l'entité et étant nécessaires pour calculer les deux éléments $T_1$, $T_2$ correspondant au chiffrement de la valeur,
- un stockage dudit nombre prédéfini de coupons par l'entité, un coupon étant utilisé par l'entité pour répondre à une requête d'authentification en provenance du vérifieur.

L'invention concerne également une entité adaptée pour être authentifiée par un vérifieur.

L'invention concerne aussi un vérifieur adapté pour authentifier au moins une entité.

L'invention porte aussi sur un programme d'ordinateur destiné à être installé dans une mémoire d'un vérifieur.

L'invention concerne aussi un support de données sur lequel est enregistré le programme d'ordinateur destiné à être installé dans une mémoire d'un vérifieur selon l'invention.

L'invention concerne également un programme d'ordinateur destiné à être installé dans une mémoire d'une entité, comprenant des instructions pour la mise en oeuvre des étapes du procédé d'authentification d'une entité selon l'invention qui sont exécutées par l'entité, lorsque le programme est exécuté par un processeur.

L'invention concerne aussi un support de données sur lequel est enregistré le programme d'ordinateur destiné à être installé dans une mémoire d'une entité selon l'invention.

L'objet de l'invention est défini dans les revendications.

De nombreux détails et avantages de l'invention seront mieux compris à la lecture de la description d'un mode particulier de réalisation en référence aux schémas annexés donnés à titre non limitatif, et dans lesquels :

- la figure 1 représente les étapes du procédé d'authentification d'une entité par un vérifieur selon un mode particulier de réalisation de l'invention ;
- la figure 2 représente un premier exemple de réalisation d'une entité selon l'invention ;
- la figure 3 représente un premier exemple de réalisation d'un vérifieur agencé pour authentifier une entité représentée sur la figure 2.

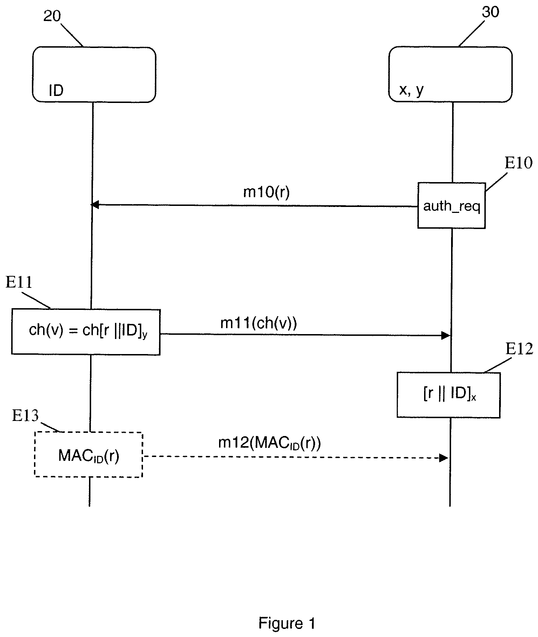

Les étapes d'un procédé d'authentification d'une étiquette radio par un lecteur radio vont maintenant être décrites en relation avec la figure 1.

Bien que le procédé selon l'invention soit décrit ici dans le cas d'une authentification d'une étiquette radio auprès d'un lecteur radio, le procédé selon l'invention ne se limite pas à cet exemple particulier. Ainsi, l'invention peut être appliquée à l'authentification de toute entité auprès d'un vérifieur.

Un lecteur radio 30 est agencé pour authentifier un ensemble d'étiquettes radio référencées dans une base de données d'identifiants d'étiquette, non représentée, à laquelle le lecteur 30 a accès. Une étiquette radio 20, dotée d'un identifiant unique ID, est référencée dans la base de données d'identifiants à laquelle le lecteur 30 a accès. Le lecteur radio 30 possède un couple de clés qui lui est propre comprenant une clé privée x, et une clé publique associée y. Le couple de clés est généré conformément à un schéma de chiffrement à clé publique. Deux exemples de schémas de chiffrement sont détaillés plus loin. Ils sont basés sur un schéma connu, le schéma El Gamal.

Dans une étape initiale E10, le lecteur 30 émet une requête d'authentification m10. Le message m10 comprend un premier aléa r, choisi par le lecteur 30.

Après réception de la requête d'authentification m10, dans une étape E11 de chiffrement et d'envoi d'une réponse, l'étiquette 20 calcule un chiffré d'une valeur v au moyen de la clé publique y du lecteur 30. La valeur v comprend le premier aléa r et une donnée d'authentification dont dépend l'identifiant ID de l'étiquette 20. Dans un exemple de réalisation de l'invention, la donnée d'authentification est l'identifiant ID de l'étiquette, et la valeur est obtenue par concaténation du premier aléa r avec l'identifiant ID de l'étiquette. En fin d'étape E11, l'étiquette 20 envoie au lecteur 30 la valeur v chiffrée dans un message m11.

Dans une étape E12 de déchiffrement, consécutive à la réception du message m11, le lecteur 30 utilise sa clé privée x pour déchiffrer la valeur v reçue chiffrée dans le message m11. Le déchiffrement de la valeur v permet d'obtenir la concaténation de l'aléa r avec l'identifiant ID de l'étiquette et ainsi l'identifiant ID de l'étiquette.

Le vérifieur vérifie que l'aléa r obtenu par déchiffrement de la valeur v est bien égal au premier aléa r envoyé dans la requête d'authentification m10. Cette vérification a pour but d'éviter une éventuelle attaque par rejeu. Au cours d'une telle attaque, un adversaire qui a observé de précédents envois de réponse par l'entité, rejoue ces réponses pour se faire passer pour l'entité. Du fait que chaque réponse d'entité dépend du premier aléa envoyé par le vérifieur dans la requête d'authentification, et que le premier aléa est différent à chaque authentification, un tel rejeu de réponse est donc impossible. Le déchiffrement de la valeur v fournit également l'identifiant de l'étiquette. Ainsi, l'étiquette 20 s'identifie et s'authentifie en même temps puisqu'elle donne et prouve qu'elle connaît son identifiant. En effet, elle est la seule à pouvoir le faire puisqu'elle est la seule avec le lecteur à connaître son identifiant ID. Le procédé selon l'invention utilise un secret partagé qui est l'identifiant de l'étiquette 20.

Dans une étape de vérification non représentée, le lecteur 30 vérifie que l'identifiant d'étiquette obtenu en déchiffrant la valeur v reçue chiffrée correspond bien à l'identifiant d'une étiquette valide. Un test sur la présence ou l'absence de l'identifiant dans la base de données des identifiants d'étiquette valides permet d'effectuer cette vérification.

Dans une réalisation alternative de l'invention, dans l'étape E11 de chiffrement et d'envoi d'une réponse, la donnée d'authentification ne contient pas explicitement l'identifiant mais un secret $a_{id}$ qui est un antécédent de l'identifiant ID par une fonction à sens unique f. La fonction f est par exemple une fonction "RSA" (du nom des inventeurs, "River, Shamir et Adelman"), ou une fonction de hachage telle que par exemple "SHA-256" (de l'anglais "Secure Hash Algorithm"). Ainsi, la donnée d'authentification est l'antécédent $a_{id}$ de l'identifiant ID, et l'identifiant ID peut être obtenu en appliquant la fonction f à l'antécédent $a_{id}$ ($f(a_{id})$ = ID). Avantageusement, l'étiquette n'a pas à stocker son identifiant mais uniquement l'antécédent $a_{id}$ de l'identifiant. En outre, il n'est pas indispensable que les identifiants d'étiquette soient gardés secrets puisque l'utilisation d'une fonction à sens unique garantit qu'un adversaire qui connaîtrait l'identifiant ID d'une étiquette ne pourrait pas en déduire la donnée d'authentification $a_{id}$ nécessaire à l'authentification.

Le protocole d'authentification selon l'invention utilise un schéma de chiffrement à clé publique offrant des performances de calcul intéressantes notamment du point de vue de l'étiquette, limitée en capacité de calcul et en capacité mémoire. En outre, le schéma utilisé par le procédé selon l'invention est adapté pour permettre un pré-calcul de certaines données destinées à être utilisées lors de l'étape de chiffrement qui est effectuée par l'étiquette. Ainsi, il est possible de pré-calculer un nombre prédéfini de telles données, appelés coupons, afin que l'étiquette s'authentifie le nombre prédéfini de fois auprès du lecteur en effectuant le moins de calculs possibles. Par exemple, il est pré-calculé dix ou vingt coupons. Les pré-calculs sont effectués par l'étiquette puis stockés dans une mémoire de l'étiquette, ou par une entité extérieure, non représentée, les coupons pré-calculés par l'entité extérieure étant alors installés dans la mémoire de l'étiquette régulièrement.

Dans un exemple de réalisation de l'invention, le schéma de chiffrement à clé publique est un schéma El Gamal. Avec ce schéma, les calculs sont effectués dans, par exemple, le groupe multiplicatif d'un corps fini ou le groupe formé par une courbe elliptique. Quel que soit ce groupe, la loi est notée dans la suite multiplicativement. Dans ce schéma, dit schéma de base, soit g un élément du groupe, le lecteur 30 possède une clé privée, notée x, et une clé publique associée, notée y, y étant obtenue selon le calcul suivant : $y=g^x$.

En prenant la valeur v en entrée et un deuxième aléa w choisi par l'étiquette, alors le chiffrement de la valeur v correspond à deux éléments $T_1$ et $T_2$, obtenus par les calculs suivants :

$$T_1 = v.y^w,$$

et

$$T_2 = g^w$$

Le déchiffrement par le lecteur de $T_1$ et $T_2$ consiste à retrouver $T_1.T_2^{-x}$ pour retrouver la valeur v fournie en entrée du chiffrement.

Dans un deuxième exemple de réalisation de l'invention, le schéma de chiffrement correspond à un schéma El Gamal modifié comme suit :

Le lecteur 30 possède une clé privée notée x et une clé publique associée notée y, y étant obtenue de manière connue selon le calcul suivant :
$y=g^x$.

En prenant la valeur v en entrée et un deuxième aléa w choisi par l'étiquette, alors le chiffrement de la valeur v correspond aux deux éléments $T_1$ et $T_2$, obtenus par les calculs suivants :
$T_1 = v \oplus H(y^w)$, où $\oplus$ représente une opération de ou exclusif, et H représente une fonction, par exemple la fonction identité, ou une fonction de hachage, et

$$T_2 = g^w$$

Le déchiffrement par le lecteur de $T_1$ et $T_2$ consiste alors à calculer $T_1 \oplus H(T_2^x)$, pour retrouver la valeur v fournie en entrée du chiffrement.

De manière connue, une fonction de hachage, par exemple SHA-256, est une fonction à sens unique qui produit des hachés de taille assez courte. Ainsi, le stockage d'un résultat obtenu par application de la fonction de hachage H à $y^W$ nécessite 160 bits pour être sûr. Le stockage de $y^w$, ainsi que de $g^w$ peut nécessiter 160 bits si l'on utilise comme corps pour le schéma de chiffrement les courbes elliptiques. Ainsi, dans une réalisation de l'invention où des coupons d'authentification sont pré-calculés et stockés dans l'entité, l'utilisation de la fonction de hachage est intéressante en termes d'espace mémoire nécessaire pour stockés les coupons pré-calculés. Ce mode est notamment intéressant dans le cas où l'entité est une étiquette RFID avec une capacité mémoire limitée.

Dans la réalisation alternative de l'invention, où le schéma de chiffrement El Gamal modifié est utilisé, alors l'entité calcule également, puis envoie dans une étape E13 représentée en pointillés sur la figure 1, un message d'authentification m12 appelé habituellement "MAC" (pour "Message Authentication Code"). L'envoi d'un tel message d'authentification a pour but de pallier une éventuelle attaque d'un adversaire qui se substituerait à l'étiquette dans des échanges d'authentification avec le lecteur 30. L'envoi du message d'authentification m12 a pour but de faire la preuve que l'étiquette 20 connaît l'identifiant ID utilisé pour calculer la réponse à la requête d'authentification renvoyée au lecteur à l'étape E11.

Au cours d'une telle attaque, un adversaire qui observerait des échanges de messages entre le lecteur 30 et l'étiquette 20, verrait circuler par exemple le premier aléa r du lecteur 30 vers l'étiquette 20, puis les éléments $T_1$ et $T_2$ envoyés en réponse par l'étiquette 20. Au cours d'une authentification ultérieure, au cours de laquelle le lecteur 30 enverrait un nouvel aléa r', alors l'adversaire pourrait répondre au lecteur en envoyant de nouveaux éléments $T_1$' et $T_2$', avec $T_2$' = $T_2$ et $T_1$' = $T_1 \oplus (r \oplus r' \parallel 0..0)$. En développant, on obtient $T_1'=(r'\parallel ID)y^w$, ce qui est conforme à ce qu'attend le lecteur 30. Ainsi, l'adversaire peut répondre à une requête d'authentification du lecteur 30 sans connaître l'identifiant ID de l'étiquette 20 à laquelle il se substitue. Cependant, l'adversaire ne peut produire un message d'authentification calculé à partir de l'identifiant ID de l'étiquette 20 qu'il ne connaît pas.

Le message d'authentification MAC envoyé par l'étiquette 20 dans le message m12 est calculé de manière classique au moyen d'un secret et d'un message à protéger. Le secret utilisé pour calculer le message d'authentification dépend de l'identifiant ID. Par exemple, dans une réalisation de l'invention, le secret est l'identifiant ID de l'étiquette 20. Dans une autre réalisation de l'invention, le secret peut être calculé à partir de l'élément $y^w$. Le message à protéger par le message d'authentification dépend du premier aléa r reçu du vérifieur. Par exemple, le message à protéger comprend le premier aléa r, ou une troncature de l'aléa r. Dans l'exemple de réalisation de l'invention, où la fonction H utilisée dans le schéma El Gamal modifié pour calculer l'élément $T_1$ lors d'un chiffrement est une fonction de hachage, alors, celle-ci peut être utilisée pour calculer le message d'authentification.

Dans un exemple de réalisation de l'invention, le message d'authentification MAC est envoyé dans le message m11. Ainsi, dans l'étape E11 de chiffrement et d'envoi d'une réponse, l'étiquette 20 calcule le chiffré d'une valeur v au moyen de la clé publique y du lecteur 30. La valeur v, dans cet exemple de réalisation, comprend le premier aléa r, la donnée d'authentification dont dépend l'identifiant ID de l'étiquette 20, ainsi que le message d'authentification MAC. Dans un exemple de réalisation de l'invention, la donnée d'authentification est l'identifiant ID de l'étiquette, et la valeur v est obtenue par concaténation du premier aléa r avec l'identifiant ID de l'étiquette et avec le message d'authentification MAC (v = r || ID || MAC). En fin d'étape E11, l'étiquette 20 envoie au lecteur 30 la valeur v chiffrée dans le message m11. Dans cet exemple, moins de données sont envoyées puisqu'un seul message est transmis au lecteur 30 au lieu de deux. En outre, cet exemple de réalisation permet de résister à un certain type d'attaque. Au cours d'une telle attaque, un attaquant qui récupère l'identifiant de l'étiquette 20, par exemple par une attaque physique de la carte, est capable de tracer de précédentes authentifications de l'étiquette 20. La prise en compte dans le message chiffré du message d'authentification MAC évite ce genre d'attaque. Ainsi, la propriété de forward privacy est respectée.

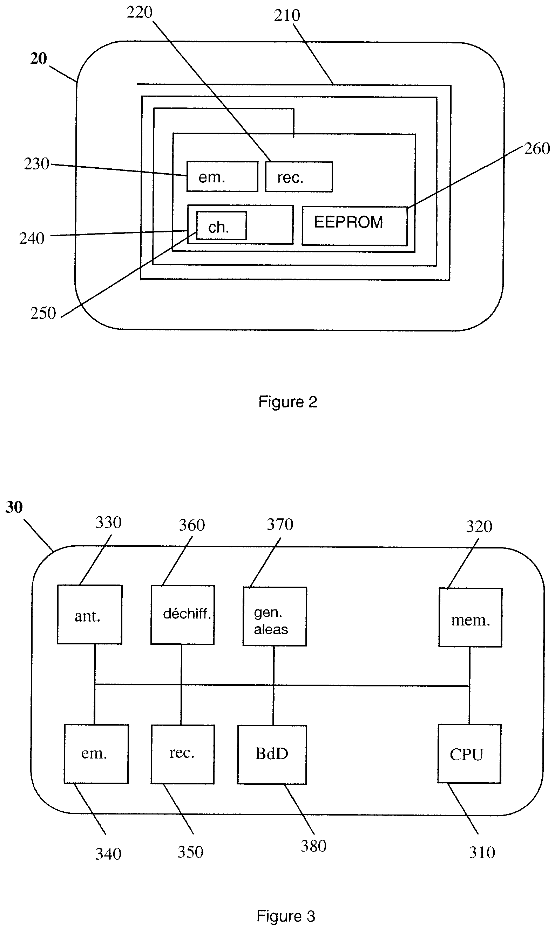

Une entité selon l'invention va maintenant être décrite en relation avec la figure 2. L'exemple d'entité décrit ici est une étiquette radio 20, adaptée pour dialoguer avec un lecteur (non représenté sur la figure 2) au cours d'une séquence d'authentification conforme aux étapes du procédé selon l'invention décrites précédemment.

Dans l'exemple particulier décrit ici, l'étiquette 20 est un dispositif passif recevant son énergie du lecteur lors d'une interrogation par celui-ci. L'étiquette 20 possède un identifiant unique ID et comprend en général :

- une antenne 210 adaptée pour recevoir et émettre sur la voie radio,
- un module de réception 220, adapté pour recevoir des données du lecteur. Le module de réception 220 coopère avec l'antenne 210 pour constituer des moyens de réception. Les moyens de réception 220, 210 sont adaptés pour recevoir du lecteur une requête d'authentification comprenant un premier aléa r choisi par le lecteur,
- un module d'émission 230, adapté pour émettre vers le lecteur. Le module d'émission 230 coopère avec l'antenne 210 pour constituer des moyens d'émission. Les moyens d'émission 230, 210 sont adaptés pour envoyer au lecteur en réponse une valeur chiffrée par des moyens de chiffrement 250.
- une puce de silicium 240 comprenant une pluralité de transistors adaptés pour constituer des portes logiques d'une logique câblée non programmable. La logique câblée définit :

- les moyens de chiffrement 250, agencés pour chiffrer la valeur v au moyen de la clé publique du lecteur. La valeur v est une réponse à la requête d'authentification reçue du lecteur. La valeur v est une concaténation du premier aléa r reçu du lecteur et d'une donnée d'authentification dont dépend l'identifiant ID de l'étiquette.

- des moyens de stockage 260, tels une mémoire de type "EEPROM" (pour "Electrically Erasable Programmable Read Only Memory"), pour stocker la clé publique du lecteur.

Dans une variante de réalisation de l'invention où un nombre prédéfini de coupons d'authentification sont pré-calculés, les moyens de stockage 240 sont également agencés pour stocker le nombre prédéfini de coupons d'authentification.

Dans une réalisation particulière de l'invention non détaillée, l'étiquette 20 a une structure comparable à celle d'une carte à puce et comprend un microprocesseur cryptographique, une mémoire de données, une mémoire programme.

Dans une autre réalisation de l'invention, non détaillée, l'étiquette 20 est un dispositif actif. L'étiquette 20 est alors équipée d'une batterie lui permettant d'émettre des signaux. Ainsi, l'étiquette 20 et le lecteur 30 peuvent interagir sur une distance plus importante que dans le cas où l'étiquette 20 est un dispositif passif qui reçoit son énergie du lecteur.

Dans une réalisation particulière de l'invention, l'entité est un système informatique, tel un ordinateur personnel qui s'authentifie auprès d'un vérifieur, par exemple un serveur. Dans cette réalisation, l'entité comprend des moyens classiques d'un ordinateur et l'invention dans ce cas concerne également :

- un programme d'ordinateur comportant des instructions pour la mise en oeuvre des étapes du procédé d'authentification réalisées par l'entité tel que décrit précédemment, lorsque ce programme est exécuté par un processeur ;
- un support d'enregistrement lisible par une entité sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal, ou un réseau de télécommunication.

Un vérifieur selon l'invention va maintenant être décrit en relation avec la figure 3. Dans l'exemple particulier décrit ici, le vérifieur est un lecteur radio 30 adapté pour authentifier des étiquettes radio telles que décrites en relation avec la figure 2.

Le lecteur radio 30 est un dispositif actif, émetteur de radio fréquences qui active une étiquette (non représentée sur la figure 3) qui passe à sa proximité en lui fournissant une énergie dont elle a besoin. Le lecteur 30 selon l'invention est adapté pour dialoguer avec l'étiquette au cours d'une séquence d'authentification conforme aux étapes du procédé selon l'invention décrites précédemment.

Le lecteur 30 comprend plusieurs modules :

- une unité de traitement 310, ou "CPU" (de l'anglais "Control Processing Unit"),
- un ensemble de mémoires 320, dont une mémoire volatile, ou "RAM" (pour "Random Access Memory") utilisée pour exécuter des instructions de code, stocker des variables, etc., et une mémoire morte, "ROM" utilisée par exemple pour stocker la clé secrète du lecteur,
- une antenne 330, adaptée pour émettre et recevoir par la voie radio,
- un module d'émission 340, agencé pour émettre vers l'étiquette. Le module d'émission 340 utilise l'antenne 330 pour émettre, et couplé à l'antenne 330 il constitue des moyens d'émission du lecteur 30. En particulier, les moyens d'émission sont agencés pour envoyer à l'étiquette une requête d'authentification à l'étiquette comprenant un premier aléa r,
- un module de réception 350, agencé pour recevoir de l'étiquette une valeur v chiffrée au moyen de la clé publique du lecteur. La valeur v est une concaténation du premier aléa r reçu du lecteur et d'une donnée d'authentification dont dépend l'identifiant ID de l'étiquette. Dans une réalisation de l'invention la donnée d'authentification est l'identifiant ID de l'étiquette. Dans une deuxième réalisation de l'invention, la donnée est un antécédent $a_{ID}$ de l'identifiant par une fonction à sens unique f. Le module de réception 350 utilise l'antenne 330 pour recevoir, et couplé à l'antenne 330 il constitue des moyens de réception du lecteur 30,
- un module de déchiffrement 360, agencé pour déchiffrer au moyen de la clé privée du lecteur la valeur v reçue chiffrée de l'entité,
- un générateur d'aléas 370, agencé pour générer des aléas à envoyer à l'étiquette dans une requête d'authentification,
- un module 380 d'accès à une base de données d'identifiants d'étiquette externe au lecteur, non représentée.

Les différents modules communiquent via un bus de communication.

Les modules 340, 350, 360 et 370 sont agencés pour mettre en oeuvre les étapes du procédé d'authentification d'une entité telle une étiquette par un vérifieur, tel le lecteur décrit précédemment. Il s'agit de préférence de modules logiciels comprenant des instructions logicielles pour faire exécuter les étapes du procédé d'authentification décrit en relation avec la figure 1.

L'invention concerne donc aussi :

- un programme d'ordinateur comportant des instructions pour la mise en oeuvre du procédé d'authentification tel que décrit précédemment, lorsque ce programme est exécuté par un processeur ;
- un support d'enregistrement lisible par un vérifieur sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal, ou un réseau de télécommunication.

L'invention concerne également un système d'authentification comprenant un vérifieur conforme à la description faite précédemment et au moins une entité, conforme à la description faite précédemment.

## Revendications

1. Procédé pour authentifier une entité (20) auprès d'un vérifieur (30), l'entité possédant un identifiant (ID), le vérifieur possédant un couple de clés privée (x) et publique (y), comprenant :

   - un envoi (m10) à l'entité d'un premier aléa (r) choisi par le vérifieur,
   - une étape (E11) de chiffrement d'une valeur (v) par l'entité au moyen de la clé publique du vérifieur, ladite valeur comprenant le premier aléa et une donnée d'authentification comprenant l'identifiant de l'entité et un message d'authentification calculé au moyen d'un secret et d'un message à protéger, ledit secret dépendant de l'identifiant et ledit message à protéger comprenant au moins une partie du premier aléa (r), ladite étape de chiffrement étant conforme à un schéma de chiffrement à clé publique, appelé schéma El Gamal modifié, dans lequel :

     - l'étape de chiffrement de la valeur (v) produit deux éléments $T_1^{'} = v \oplus H(y^w)$, et $T_2^{'} = g^w$, où :

       - H est la fonction identité ou une fonction de hachage, et $\oplus$ une opération de ou exclusif,
       - g est un générateur d'un groupe utilisé par ledit schéma,
       - y est la clé publique à laquelle est associée la clé privée x du vérifieur, lesdites clés étant telles que $y = g^x$,

       - w est un deuxième aléa choisi par l'entité,

     - l'étape de déchiffrement par le vérifieur des deux éléments $T_1$ et $T_2$ calcule $T_1^{'} \oplus H'(T_2^{'x})$ pour fournir ladite valeur (v),

   - un envoi (m11) en réponse, par l'entité d'un message comprenant ladite valeur chiffrée, pour authentification de ladite entité.

2. Procédé selon la revendication 1, dans lequel la donnée d'authentification est un antécédent ($a_{id}$) de l'identifiant, une fonction à sens unique (f) appliquée à cet antécédent produisant l'identifiant (ID) de l'entité.

3. Procédé selon la revendication 1, dans lequel l'étape de chiffrement utilise au moins un résultat d'un précalcul, stocké dans l'entité.

4. Procédé selon l'une des revendications 1 à 3, comprenant au préalable :

   - un pré-calcul d'un nombre prédéfini de coupons d'authentification, un coupon d'authentification comprenant deux parties ($y^w$, $g^w$), lesdites deux parties dépendant du deuxième aléa (w) choisi par l'entité et étant nécessaires pour calculer les deux éléments ($T_1$, $T_2$) correspondant au chiffrement de la valeur,
   - un stockage dudit nombre prédéfini de coupons par l'entité, un coupon étant utilisé par l'entité pour répondre à une requête d'authentification en provenance du vérifieur.

5. Entité (20) adaptée pour être authentifiée par un vérifieur, l'entité possédant un identifiant (ID), le vérifieur possédant un couple de clés privée (x) et publique (y), et comprenant :

   - des moyens de réception (210, 220), agencés pour recevoir en provenance du vérifieur un premier aléa (r) choisi par le vérifieur,
   - des moyens de chiffrement (250), agencés pour chiffrer une valeur (v) au moyen de la clé publique du vérifieur, ladite valeur comprenant le premier aléa (r) et une donnée d'authentification comprenant l'identifiant de l'entité et un message d'authentification calculé au moyen d'un secret et d'un message à protéger, ledit secret dépendant de l'identifiant et ledit message à protéger comprenant au moins une partie du premier aléa (r), le chiffrement étant conforme à un schéma de chiffrement à clé publique, appelé schéma El Gamal modifié, dans lequel :

- l'étape de chiffrement de la valeur (v) produit deux éléments $T_1' = v \oplus H(y^w)$, et

$$T_2' = g^w, \text{ où :}$$

   - H est la fonction identité ou une fonction de hachage, et $\oplus$ une opération de ou exclusif,
   - g est un générateur d'un groupe utilisé par ledit schéma,
   - y est la clé publique à laquelle est associée la clé privée x du vérifieur, lesdites clés étant telles que y = g$^x$,
   - w est un deuxième aléa choisi par l'entité,

   - l'étape de déchiffrement par le vérifieur des deux éléments $T_1$ et $T_2$ calcule

$$T_1' \oplus H'(T_2'^x) \text{ pour fournir ladite valeur}$$
(v),
   - des moyens d'envoi (210, 230), agencés pour envoyer au vérifieur ladite valeur (v) chiffrée.

**6.** Entité selon la revendication 5, comprenant en outre des moyens de stockage (260) d'au moins un résultat d'un pré-calcul, ledit résultat étant destiné à être utilisé par les moyens de chiffrement.

**7.** Vérifieur (30) adapté pour authentifier au moins une entité, l'entité possédant un identifiant (ID), le vérifieur possédant un couple de clés privée (x) et publique (y), le vérifieur comprenant :

   - des moyens d'envoi (330, 340), agencés pour envoyer à l'entité un premier aléa (r),
   - des moyens de réception (330, 350), agencés pour recevoir de l'entité une valeur (v) chiffrée au moyen de la clé publique du vérifieur, ladite valeur comprenant le premier aléa (r) et une donnée d'authentification comprenant l'identifiant de l'entité et un message d'authentification calculé au moyen d'un secret et d'un message à protéger, ledit secret dépendant de l'identifiant et ledit message à protéger comprenant au moins une partie du premier aléa (r), le chiffrement étant conforme à un schéma de chiffrement à clé publique, appelé schéma El Gamal modifié, dans lequel :

   - l'étape de chiffrement de la valeur (v) produit deux éléments $T_1' = v \oplus H(y^w)$, et

$$T_2' = g^w, \text{ où :}$$

   - H est la fonction identité ou une fonction de hachage, et $\oplus$ une opération de ou exclusif,
   - g est un générateur d'un groupe utilisé par ledit schéma,
   - y est la clé publique à laquelle est associée la clé privée x du vérifieur, lesdites clés étant telles que y = g$^x$,
   - w est un deuxième aléa choisi par l'entité,

   - l'étape de déchiffrement par le vérifieur des deux éléments $T_1$ et $T_2$ calcule

$$T_1' \oplus H'(T_2'^x) \text{ pour fournir ladite valeur}$$
(v),
   - des moyens de déchiffrement (360), agencés pour déchiffrer au moyen de la clé privée du vérifieur la valeur reçue chiffrée de l'entité.

**8.** Programme d'ordinateur destiné à être installé dans une mémoire d'un vérifieur, comprenant des instructions pour la mise en oeuvre des étapes du procédé d'authentification d'une entité selon l'une des revendications 1 à 4 qui sont exécutées par le vérifieur, lorsque le programme est exécuté par un processeur.

**9.** Support de données sur lequel est enregistré le programme d'ordinateur selon la revendication 8.

**10.** Programme d'ordinateur destiné à être installé dans une mémoire d'une entité, comprenant des instructions pour la mise en oeuvre des étapes du procédé d'authentification d'une entité selon l'une des revendications 1 à 4 qui sont exécutées par l'entité, lorsque le programme est exécuté par un processeur.

**Patentansprüche**

**1.** Verfahren zum Authentifizieren einer Entität (20) bei einem Verifizierer (30), wobei die Entität eine Kennung (ID) besitzt, wobei der Verifizierer ein Schlüsselpaar aus einem privaten (x) und einem öffentlichen (y) Schlüssel besitzt, umfassend:

   - ein Senden (m10) einer ersten vom Verifizierer gewählten Zufallszahl (r) an die Entität,
   - einen Schritt (E11) des Verschlüsselns eines Werts (v) durch die Entität mittels des öffentlichen Schlüssels des Verifizierers, wobei der Wert die erste Zufallszahl umfasst und einen Authentifizierungsdatenwert, der die Kennung der Entität umfasst und eine Authentifizierungsnachricht, die mittels eines Geheimnisses und einer zu schützenden Nachricht berechnet wird, wobei das Geheimnis von der Kennung abhängt und die zu schützende Nachricht mindestens einen Teil der ersten Zufallszahl (r) umfasst, wobei der Verschlüsselungsschritt einem Verschlüssungsschema mit öffentlichem Schlüssel entspricht, das modifiziertes ElGamal-Schema genannt wird, in dem:

- der Schritt des Verschlüsselns des Werts (v) zwei Elemente $T_1' = v \oplus H(y^w)$ und $T_2' = g^w$ ergibt, worin:

- H die Identitätsfunktion oder eine Streuwertfunktion und $\oplus$ eine Exklusiv-Oder-Operation ist,
- g ein Generator einer Gruppe ist, der von dem Schema verwendet wird,
- y der öffentliche Schlüssel ist, dem der private Schlüssel x des Verifizierers zugeordnet ist, wobei die Schlüssel derart sind, dass y = g^x,
- w eine zweite von der Entität gewählte Zufallszahl ist,
- der Schritt des Entschlüsselns der beiden Elemente T_1 und T_2 durch den Verifizierer $T_1' \oplus H'(T_2'^x)$ berechnet, um den Wert (v) auszugeben,
- ein Senden (m11) einer Antwortnachricht, die den verschlüsselten Wert umfasst, durch die Entität zum Authentifizieren der Entität.

2. Verfahren nach Anspruch 1, bei dem der Authentifizierungsdatenwert ein Vorgänger ($a_{id}$) der Kennung ist, wobei eine auf diesen Vorgänger angewandte Einwegfunktion (f) die Kennung (ID) der Entität ergibt.

3. Verfahren nach Anspruch 1, bei dem der Verschlüsselungsschritt mindestens ein Ergebnis einer Vorberechnung verwendet, das in der Entität gespeichert ist.

4. Verfahren nach einem der Ansprüche 1 bis 3, umfassend zuvor:

- eine Vorberechnung einer vorgegebenen Anzahl von Authentifizierungscoupons, wobei ein Authentifizierungscoupon zwei Teile ($y^w$, $g^w$) umfasst, wobei die beiden Teile von der zweiten von der Entität gewählten Zufallszahl (w) abhängen und erforderlich sind, um die beiden der Verschlüsselung des Werts entsprechenden Elemente (T_1, T_2) zu berechnen,
- eine Speicherung der vorgegebenen Anzahl von Coupons durch die Entität, wobei ein Coupon von der Entität verwendet wird, um eine vom Verifizierer kommende Authentifizierungsanfrage zu beantworten.

5. Entität (20), die geeignet ist, von einem Verifizierer authentifiziert zu werden, wobei die Entität eine Kennung (ID) besitzt, wobei der Verifizierer ein Schlüsselpaar aus einem privaten (x) und einem öffentlichen (y) Schlüssel besitzt, und umfassend:

- Empfangsmittel (210, 220), die dazu eingerichtet sind, vom Verifizierer eine erste vom Verifizierer gewählte Zufallszahl (r) zu empfangen,
- Verschlüsselungsmittel (250), die dazu eingerichtet sind, einen Wert (v) mittels des öffentlichen Schlüssels des Verifizierers zu verschlüsseln, wobei der Wert die erste Zufallszahl (r) umfasst und einen Authentifizierungsdatenwert, der die Kennung der Entität umfasst und eine Authentifizierungsnachricht, die mittels eines Geheimnisses und einer zu schützenden Nachricht berechnet wird, wobei das Geheimnis von der Kennung abhängt und die zu schützende Nachricht mindestens einen Teil der ersten Zufallszahl (r) umfasst, wobei die Verschlüsselung einem Verschlüssungsschema mit öffentlichem Schlüssel entspricht, das modifiziertes ElGamal-Schema genannt wird, in dem:

- der Schritt des Verschlüsselns des Werts (v) zwei Elemente $T_1' = v \oplus H(y^w)$ und $T_2' = g^w$ ergibt, worin:

- H die Identitätsfunktion oder eine Streuwertfunktion und $\oplus$ eine Exklusiv-Oder-Operation ist,
- g ein Generator einer Gruppe ist, der von dem Schema verwendet wird,
- y der öffentliche Schlüssel ist, dem der private Schlüssel x des Verifizierers zugeordnet ist, wobei die Schlüssel derart sind, dass y = g^x,
- w eine zweite von der Entität gewählte Zufallszahl ist,
- der Schritt des Entschlüsselns der beiden Elemente T_1 und T_2 durch den Verifizierer $T_1' \oplus H'(T_2'^x)$ berechnet, um den Wert (v) auszugeben,
- Sendemittel (210, 230), die dazu eingerichtet sind, den verschlüsselten Wert (v) an den Verifizierer zu senden.

6. Entität nach Anspruch 5, umfassend ferner Speichermittel (260) zum Speichern mindestens eines Vorberechnungsergebnisses, wobei das Ergebnis dazu bestimmt ist, von den Verschlüsselungsmitteln verwendet zu werden.

7. Verifizierer (30), der geeignet ist, mindestens eine Entität zu authentifizieren, wobei die Entität eine Kennung (ID) besitzt, wobei der Verifizierer ein Schlüsselpaar aus einem privaten (x) und einem öffentlichen (y) Schlüssel besitzt, wobei der Verifizierer umfasst:

- Sendemittel (330, 340), die dazu eingerichtet sind, eine erste Zufallszahl (r) an die Entität zu senden,
- Empfangsmittel (330, 350), die dazu eingerichtet sind, von der Entität einen Wert (v) zu empfangen, der mittels des öffentlichen Schlüssels des Verifizierers verschlüsselt wurde, wobei der Wert die erste Zufallszahl (r) umfasst und einen Authentifizierungsdatenwert, der die Kennung der Entität umfasst und eine Authentifizierungsnachricht, die mittels eines Geheimnisses und einer zu schützenden Nachricht berechnet wird, wobei das Geheimnis von der Kennung abhängt und die zu schützende Nachricht mindestens einen Teil der ersten Zufallszahl (r) umfasst, wobei die Verschlüsselung einem Verschlüsselungsschema mit öffentlichem Schlüssel entspricht, das modifiziertes ElGamal-Schema genannt wird, in dem:

- der Schritt des Verschlüsselns des Werts (v) zwei Elemente $T_1' = v \oplus H(y^w)$ und $T_2' = g^w$ ergibt, worin:

- H die Identitätsfunktion oder eine Streuwertfunktion und $\oplus$ eine Exklusiv-Oder-Operation ist,
- g ein Generator einer Gruppe ist, der von dem Schema verwendet wird,
- y der öffentliche Schlüssel ist, dem der private Schlüssel x des Verifizierers zugeordnet ist, wobei die Schlüssel derart sind, dass $y = g^x$,
- w eine zweite von der Entität gewählte Zufallszahl ist,
- der Schritt des Entschlüsselns der beiden Elemente $T_1$ und $T_2$ durch den Verifizierer $T_1' \oplus H'(T_2'^x)$ berechnet, um den Wert (v) auszugeben,
- Entschlüsselungsmittel (360), die dazu eingerichtet sind, den von der Entität empfangenen verschlüsselten Wert mittels des privaten Schlüssels des Verifizierers zu entschlüsseln.

8. Computerprogramm, das dazu bestimmt ist, in einem Speicher eines Verifizierers installiert zu werden, umfassend Anweisungen zur Umsetzung der Schritte des Verfahrens zur Authentifizierung einer Entität nach einem der Ansprüche 1 bis 4, die vom Verifizierer ausgeführt werden, wenn das Programm von einem Prozessor ausgeführt wird.

9. Datenträger, auf dem das Computerprogramm nach Anspruch 8 gespeichert ist.

10. Computerprogramm, das dazu bestimmt ist, in einem Speicher einer Entität installiert zu werden, umfassend Anweisungen zur Umsetzung der Schritte des Verfahrens zur Authentifizierung einer Entität nach einem der Ansprüche 1 bis 4, die von der Entität ausgeführt werden, wenn das Programm von einem Prozessor ausgeführt wird.

**Claims**

1. Method for authenticating an entity (20) with a verifier (30), the entity possessing an identifier (ID), the verifier possessing a private key (x) / public key (y) pair, comprising:

- a sending (m10) to the entity of a first random (r) chosen by the verifier,
- a step (E11) of encrypting a value (v) by the entity by means of the public key of the verifier, said value comprising the first random and an authentication datum comprising the identifier of the entity and an authentication message computed by means of a secret and of a message to be protected, said secret depending on the identifier and said message to be protected comprising at least one part of the first random (r), said encryption step complying with a public-key encryption scheme, called the modified El Gamal scheme, in which:

- the step of encrypting the value (v) produces two elements $T_1' = v \oplus H(y^w)$, and $T_2' = g^w$, where

- H is the identity function or a hash function and $\oplus$ an exclusive or operation,
- g is a generator of a group used by said scheme,
- y is the public key with which the private key x of the verifier is associated, said keys being such that $y = g^x$,
- w is a second random chosen by the entity,

- the step of decryption by the verifier of the two elements $T_1$ and $T_2$ computes $T_1^{'} \oplus H'(T_2^{'x})$ so as to provide said value (v),
- a sending (m11) in response, by the entity, of a message comprising said encrypted value, for authentication of said entity.

2. Method according to Claim 1, in which the authentication datum is an antecedent ($a_{id}$) of the identifier, a one-way function (f) applied to this antecedent producing the identifier (ID) of the entity.

3. Method according to Claim 1, in which the encryption step uses at least one result of a pre-computation, stored in the entity.

4. Method according to one of Claims 1 to 3, comprising beforehand:

    - a pre-computation of a predefined number of authentication coupons, an authentication coupon comprising two parts ($y^w$, $g^w$), said two parts depending on the second random (w) chosen by the entity and being necessary in order to compute the two elements ($T_1$, $T_2$) corresponding to the encryption of the value,

    - a storage of said predefined number of coupons by the entity, a coupon being used by the entity to respond to an authentication request originating from the verifier.

5. Entity (20) adapted for being authenticated by a verifier, the entity possessing an identifier (ID), the verifier possessing a private key (x) / public key (y) pair, and comprising:

    - reception means (210, 220), designed to receive from the verifier a first random (r) chosen by the verifier,

    - encryption means (250), designed to encrypt a value (v) by means of the public key of the verifier, said value comprising the first random (r) and an authentication datum comprising the identifier of the entity and an authentication message computed by means of a secret and of a message to be protected, said secret depending on the identifier and said message to be protected comprising at least one part of the first random (r), the encryption complying with a public-key encryption scheme, called the modified El Gamal scheme, in which:

      - the step of encrypting the value (v) produces two elements

$$T_1^{'} = v \oplus H(y^w), \text{ and } T_2^{'} = g^w,$$

where

    - H is the identity function or a hash function and $\oplus$ an exclusive or operation,

    - g is a generator of a group used by said scheme,

    - y is the public key with which the private key x of the verifier is associated, said keys being such that $y = g^x$,

    - w is a second random chosen by the entity,

- the step of decryption by the verifier of the two elements $T_1$ and $T_2$ computes $T_1^{'} \oplus H'(T_2^{'x})$ so as to provide said value (v),

- sending means (210, 230), designed to send said encrypted value (v) to the verifier.

6. Entity according to Claim 5, furthermore comprising means of storage (260) of at least one result of a pre-computation, said result being intended to be used by the encryption means.

7. Verifier (30) adapted for authenticating at least one entity, the entity possessing an identifier (ID), the verifier possessing a private key (x) / public key (y) pair, the verifier comprising:

    - sending means (330, 340), designed to send a first random (r) to the entity,

    - reception means (330, 350), designed to receive from the entity a value (v) encrypted by means of the public key of the verifier, said value comprising the first random (r) and an authentication datum comprising the identifier of the entity and an authentication message computed by means of a secret and of a message to be protected, said secret depending on the identifier and said message to be protected comprising at least one part of the first random (r), the encryption complying with a public-key encryption scheme, called the modified El Gamal scheme, in which:

      - the step of encrypting the value (v) produces two elements

$$T_1^{'} = v \oplus H(y^w),$$ and

$$T_2^{'} = g^w, \text{ where}$$

      - H is the identity function or a hash function and $\oplus$ an exclusive or operation,

- g is a generator of a group used by said scheme,
- y is the public key with which the private key x of the verifier is associated, said keys being such that $y = g^x$,
- w is a second random chosen by the entity,

- the step of decryption by the verifier of the two elements $T_1$ and $T_2$ computes $T_1^{'} \oplus H'(T_2^{'x})$ so as to provide said value (v),
- decryption means (360), designed to decrypt by means of the private key of the verifier the encrypted value received from the entity.

8. Computer program intended to be installed in a memory of a verifier, comprising instructions for the implementation of the steps of the method for authenticating an entity according to one of Claims 1 to 4, which are executed by the verifier when the program is executed by a processor.

9. Data medium on which the computer program according to Claim 8 is recorded.

10. Computer program intended to be installed in a memory of an entity, comprising instructions for the implementation of the steps of the method for authenticating an entity according to one of Claims 1 to 4, which are executed by the entity when the program is executed by a processor.

Figure 1

Figure 2

Figure 3

**RÉFÉRENCES CITÉES DANS LA DESCRIPTION**

**Littérature non-brevet citée dans la description**

- Universal Re-encryption for Mixnets. **PHILIPPE GOLLE et al.** TOPICS IN CRYPTOLOGY, CT-RSA 2004, LECTURE NOTES IN COMPUTER SCIENCE (LNCS). SPRINGER-VERLAG, 30 Janvier 2004, vol. 2964, 163-178